# EUROPÄISCHE PATENTSCHRIFT

(11) **EP 1 670 830 B1**
(45) Veröffentlichungstag und Bekanntmachung des Hinweises auf die Patenterteilung: **03.01.2007**
(21) Anmeldenummer: 04790176.4
(22) Anmeldetag: 07.10.2004
(51) Int. Cl.: C08F 2/20, C08F 18/04, C08F 8/12, C04B 24/26

(54) **MODIFIZIERTE POLYVINYLALKOHOLE ENTHALTENDE POLYMERZUSAMMENSETZUNGEN**
POLYMERIC COMPOSITIONS CONTAINING MODIFIED POLYVINYL ALCOHOLS
COMPOSITIONS POLYMERES CONTENANT DES POLYVINYLALCOOLS MODIFIES

(30) Priorität: 09.10.2003 DE 10346973
(43) Veröffentlichungstag der Anmeldung: 21.06.2006
(73) Patentinhaber: Wacker Polymer Systems GmbH & Co. KG, 84489 Burghausen (DE)
(72) Erfinder: BAUER, Werner, 84508 Burgkirchen (DE); DIETRICH, Ulf, 67591 Wachenheim (DE)
(74) Vertreter: Schuderer, Michael
(86) Internationale Anmeldenummer: PCT/EP2004/011213
(87) Internationale Veröffentlichungsnummer: WO 2005/035645

(56) Entgegenhaltungen:
- EP-A- 1 065 224
- EP-B- 0 359 746
- EP-B- 1 023 331
- EP-B- 1 112 238
- DE-A1- 3 215 969

## Beschreibung

Die Erfindung betrifft modifizierte Polyvinylalkohole enthaltende Polymerzusammensetzungen in Form deren wässrigen Polymerdispersionen oder in Wasser redispergierbaren Polymerpulver.

Schutzkolloid-stabilisierte Polymerisate werden vor allem in Form deren wässriger Dispersionen oder von in Wasser redispergierbaren Polymerpulvern in vielerlei Anwendungen, beispielsweise als Beschichtungsmittel oder Klebemittel für die unterschiedlichsten Substrate, zum Beispiel zementäre Baukleber, eingesetzt. Als Schutzkolloide werden in der Regel Polyvinylalkohole eingesetzt. Polyvinylalkohol ist ein bekanntes und viel verwendetes Schutzkolloid für Polymerdispersionen und wird auch als Verdüsungshilfe zur Sprühtrocknung derselben eingesetzt.

Als wasserlösliches Polymer mit hoher Ionenstabilität zeigt Polyvinylalkohol allerdings im Bereich von hydraulisch abbindenden Mörtelsystemen, wie zementären Fliesenklebern, eine hohe Sensitivität gegenüber eindringendem Wasser. Aufgrund seiner Glasübergangstemperatur zeigt Polyvinylalkohol auch eine hohe Sensitivität bei Temperaturbelastungen, beispielsweise bei Fliesen, die auf Fußbodenheizungen verklebt wurden.

Es bestand daher die Aufgabe, Polymerzusammensetzungen zur Verfügung zu stellen, welche Polyvinylalkohol enthalten, ohne die obengenannten Nachteile aufzuweisen. Insbesondere sollten mit solchen Polymerzusammensetzungen modifizierte Baustoffmassen verbesserte Haftzugwerte, vor allem nach Naß- und Wärmelagerung, aufweisen.

Überraschenderweise wurde gefunden, dass sich diese Aufgabe mit Polyvinylalkoholen lösen läßt, welche eine latente Carbonsäurefunktion enthalten oder phosphorhaltige Comonomereinheiten enthalten.

Gegenstand der Erfindung sind modifizierte Polyvinylalkohole enthaltende Polymerzusammensetzungen in Form deren wässrigen Dispersionen und in Wasser redispergierbaren Pulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, dadurch gekennzeichnet, dass als modifizierte Polyvinylalkohole solche mit latenter Carbonsäurefunktion und/oder solche mit phosphorhaltigen Comonomereinheiten enthalten sind.

Polyvinylalkohole mit latenter Carbonsäurefunktion werden dadurch erhalten, dass Vinylacetat mit einem oder mehreren Comonomeren aus der Gruppe umfassend Methacrylsäureester und Acrylsäureester von Alkoholen mit 1 bis 15 C-Atomen copolymerisiert wird, und das damit erhaltene Mischpolymerisat anschließend verseift wird. Im allgemeinen werden 0.5 bis 50 Gew.-%, vorzugsweise 1 bis 20 Gew.-%, jeweils bezogen auf Gesamtmonomer, (Meth)acrylsäureester copolymerisiert. Bevorzugt werden Acrylsäureester von C₁- bis C₄-Alkoholen, besonders bevorzugt Methylacrylat, Ethylacrylat, n-Propylacrylat, n- und t-Butylacrylat.

Polyvinylalkohole mit phosphorhaltigen Comonomereinheiten werden dadurch erhalten, dass Vinylacetat mit einem oder mehreren Comonomeren aus der Gruppe umfassend Vinylphosphonsäure, Methacrylsäureester und Acrylsäureester von Phosphorsäure-endmodifizierten Polyalkylenglykolen mit C₂- bis C₄-Alkylen-einheiten und 1 bis 100 Oxyalkyleneinheiten, bevorzugt 1 bis 20 Oxyalkyleneinheiten, besonders bevorzugt Polyethylenglykolen mit 3 bis 13 Oxyethyleneinheiten copolymerisiert wird, und das damit erhaltene Mischpolymerisat anschließend verseift wird. Polyvinylalkohole mit Vinylphosphonsäure-Einheiten können auch dadurch erhalten werden, dass das Polyvinylacetat zunächst hydrolysiert wird, und anschließend mit Diphosphorpentoxid umgesetzt wird. Im allgemeinen werden 0.5 bis 50 Gew.-%, vorzugsweise 0.5 bis 10 Gew.-%, jeweils bezogen auf Gesamtmonomer, phosphorhaltige Comonomere copolymerisiert.

Die modifizierten Polyvinylalkohole können nach bekannten Verfahren der Polyvinylalkoholherstellung erzeugt werden. Vorzugsweise wird die Polymerisation in organischen Lösungsmitteln bei erhöhter Temperatur mit Peroxiden, Hydroperoxiden und Azoverbindungen als Initiator durchgeführt. Als Lösungsmittel werden bevorzugt Alkohole wie Methanol oder Propanol eingesetzt. Das resultierende Vinylacetat-Mischpolymerisat wird vorzugsweise nicht isoliert, sondern direkt der Verseifung unterworfen. Die Verseifung erfolgt nach bekannten Verfahren, zum Beispiel mit methanolischer NaOH als Katalysator. Nach der Verseifung wird das Lösungsmittel durch destillative Aufarbeitung gegen Wasser ausgetauscht. Das Schutzkolloid wird vorzugsweise nicht isoliert, sondern direkt als wässrige Lösung für die Polymerisation oder die Sprühtrocknung verwendet. Der Hydrolysegrad beträgt im allgemeinen 70 bis 100 Mol-%, vorzugsweise 85 bis 95 Mol-%, jeweils bezogen auf Vinylacetat-Einheiten.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 130°C, vorzugsweise 60°C bis 110°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Für die Herstellung von modifizierte Polyvinylalkohole enthaltenden wässrigen Polymerdispersionen wird der modifizierte Polyvinylalkohol mit latenter Carbonsäurefunktion und/oder mit phosphorhaltigen Comonomereinheiten als Schutzkolloid eingesetzt. Bevorzugt werden Polyvinylalkohole mit phosphorhaltigen Comonomereinheiten aus der Gruppe umfassend Vinylphosphonsäure, sowie Methacrylsäureester und Acrylsäureester von Phosphorsäure-endmodifizierten Polyalkylenglykolen mit C₂- bis C₄-Alkyleneinheiten und 1 bis 100 Oxyalkyleneinheiten. Zusätzlich können weitere Schutzkolloide eingesetzt werden, beispielsweise teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Vorzugsweise wird ohne weitere Schutzkolloide polymerisiert.

Die modifizierten Polyvinylalkohole werden im allgemeinen in einer Menge von insgesamt 1 bis 20 Gew.-%, bevorzugt 3 bis 15 Gew.-%, jeweils bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Vorzugsweise wird ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 22 C-Atomen, Alkyl- oder Alkylarylethersulfate mit 8 bis 22 C-Atomen im hydrophoben Rest und bis zu 100 Ethylen- oder Propylenoxideinheiten, Alkyl- oder Alkylarylsulfonate mit 8 bis 22 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 100 Ethylenoxid- und/oder Propylenoxid-Einheiten.

Die Monomere können insgesamt vorgelegt werden, insgesamt zudosiert werden oder in Anteilen vorgelegt werden, und der Rest nach der Initiierung der Polymerisation zudosiert werden. Vorzugsweise wird so vorgegangen, dass 50 bis 100 Gew.-%, bezogen auf das Gesamtgewicht der Monomere vorgelegt wird, und der Rest zudosiert wird. Die Dosierungen können separat (räumlich und zeitlich) durchgeführt werden, oder die zu dosierenden Komponenten können alle oder teilweise voremulgiert dosiert werden.

Hilfsmonomeren können abhängig von ihrer chemischen Natur ebenfalls vollständig vorgelegt oder dosiert werden. Auch teilweise Vorlage oder Dosierung ist möglich. Bei Vinylacetatpolymerisationen werden die Hilfsmonomere in Abhängkeit ihrer Copolymerisationsparameter dosiert oder vorgelegt. Acrylsäurederivate beispielsweise werden dosiert, während Vinylsulfonat vorgelegt werden kann.

Der Monomerumsatz wird mit der Initiatordosierung gesteuert. Die Initiatoren werden vorzugsweise insgesamt zudosiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Dispersionen haben einen Feststoffgehalt von 30 bis 75 Gew.-%, vorzugsweise von 50 bis 65 Gew.-%.

Zur Herstellung der in Wasser redispergierbaren Polymerpulver werden die entsprechenden wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Es kann dabei so vorgegangen werden, dass mit, von den modifizierten Polyvinylalkoholen verschiedenen, Schutzkolloiden stabilisierte Polymerdispersionen, beispielsweise solche, welche teilverseiften Polyvinylalkohol als Schutzkolloid enthalten, in Gegenwart eines modifizierten Polyvinylalkohols mit latenter Carbonsäurefunktion und/oder mit phosphorhaltigen Comonomereinheiten als Verdüsungshilfe sprühgetrocknet werden.

Eine weitere Möglichkeit besteht darin, dass wässrige Polymerdispersionen, welche als Schutzkolloid modifizierten Polyvinylalkohol mit latenter Carbonsäurefunktion, vorzugsweise Polyvinylalkohol mit phosphorhaltigen Comonomereinheiten enthalten, in Gegenwart einer Verdüsungshilfe sprühgetrocknet werden, wobei die Verdüsungshilfe ein modifizierter Polyvinylalkohol mit latenter Carbonsäurefunktion oder ein modifizierter Polyvinylalkohol mit phosphorhaltigen Comonomereinheiten sein kann, oder als Verdüsungshilfe andere, von den modifizierten Polyvinylalkoholen verschiedene, Schutzkolloide eingesetzt werden.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete, von den modifizierten Polyvinylalkoholen verschiedene, Verdüsungshilfen sind teilverseifte und vollverseifte Polyvinylalkohole mit einem Hydrolysegrad von 75 bis 100 Mol-%; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015), als Verdüsungshilfe eingesetzt.

Am meisten bevorzugt werden in Wasser redispergierbare Polymerpulver, welche durch Sprühtrocknung von wässrigen Polymerdispersionen erhalten werden, welche mit teilverseiftem Polyvinylalkohol oder einem mit phosphorhaltigen Comonomereinheiten modifizierten Polyvinylalkohol stabilisiert sind, und die in Gegenwart von einem mit phosphorhaltigen Comonomereinheiten modifizierten Polyvinylalkohol oder einem modifizierten Polyvinylalkohol mit latenter Carbonsäurefunktion als Verdüsungshilfe getrocknet werden.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren Polymerpulver können in den dafür typischen Anwendungsbereichen eingesetzt werden. Beispielsweise in bauchemischen Produkten in Verbindung mit hydraulisch abbindenden oder hydraulisch erhärtenden Bindemitteln wie Zementen (Portland-, Aluminat-, Trass-, Hütten-, Magnesia-, Phosphatzement), Gips, Wasserglas, für die Herstellung von Bauklebern, insbesondere zementäre Fliesenkleber, Wärmedämmverbundsystemen, Putzen, insbesondere Kalk-Zement-Putze, Spachtelmassen, insbesondere selbstverlaufende Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

### Beispiel 1:

### Herstellung eines Copolymeren aus Vinylacetat und Methylacrylat

In einem 17 1 Autoklaven wurden 328.7 g Methylacrylat, 4090 g Vinylacetat und 4340 g Methanol vorgelegt. Diese Vorlage wurde auf 58°C erwärmt und gerührt. Die Initiatordosierung bestand aus 86.2 g Trigonox 23 (t-Butylperneodecanoat), gelöst in 310.1 g Methanol. Bei 58°C wurde eine Stoßdosierung des Initiatorzulaufs von 38.5 g zugegeben. Danach wurde der Initiatorzulauf mit einer Dosierrate von 78.9 g/h gestartet. Die Reaktion wurde konstant bei einer Temperatur von 58°C gehalten.
Die Monomerdosierung bestand aus 4960 g Vinylacetat und 396.9 g Methylacrylat. 45 min nach Start der Initiatordosierung wurde die Monomerdosierung mit einer Rate von 2680 g/h gestartet.
Die Initiatordosierung wurde noch 1 h länger gefahren als die Monomerdosierung. Danach wurden 15.1 g Trigonox 23 zugegeben und die Reaktionstemperatur über einen Zeitraum von 90 min von 60°C auf 70°C erhöht. Danach wurde das so hergestellte Festharz im heißen Zustand abgefüllt und mit 19.7 kg Methanol (Kesselspülung) verdünnt.
Man erhielt ein Festharz von 67.5 % (unverdünnte Probe), nach Methanol-Zugabe 25.9 % (K-Wert nach Fikentscher, 1 % in Methanol: 32).

### Beispiel 2:

### Verseifung eines Copolymeren aus Vinylacetat und Methylacrylat

In einem 120 1 Autoklaven wurde das Festharz aus Beispiel 1 mit Methanol auf einen Festgehalt von 25.0 % eingestellt. 36.95 kg dieses Festharzes wurden mit 7.68 kg Methylacetat gemischt und auf eine Temperatur von 40°C erwärmt. Danach wurde der ruhende Kesselinhalt mit 2.24 kg Methanol überschichtet. Darauf wurde eine Lösung von 581.5 g wässriger Natronlauge (46 %-ig) in 1116 g Methanol gegeben. Die Kraftaufnahme des Rührers wurde über die Zeit verfolgt.
Die Reaktionszeit bis zum Auftreten des Viskositätsmaximums (= Gelpunkt) betrug 10 min. Weitere 10 min nach Auftreten des Gelpunkts wurde die Reaktion mit 791.6 g Essigsäure abgebrochen. Danach wurden durch Einleiten von Heißdampf die Lösungsmittel Methanol und Methylacetat ausgetrieben und eine 15.9 %-ige Lösung eines Copolymeren aus Vinylacetat/Vinylalkohol/Methylacrylat erhalten. Die Viskosität einer 4 %-igen wässrigen Lösung lag nach der Höppler-Methode bei 3.93, die Verseifungszahl bei 144.

### Beispiel 3:

Herstellung eines Copolymeren aus Vinylacetat und einem Methacrylsäureester eines Phosphorsäure-endmodifizierten Polyethylenglycols (Sipomer^{®} PAM 100, Handelsprodukt der Fa. Rhodia)

In einem 17 l Autoklaven wurden 5620 g Vinylacetat und 1410 g Methanol zusammen mit 21.36 g t-Butylperoxy-2-ethylhexanoat (TBPEH) vorgelegt. Diese Vorlage wurde auf 60°C erwärmt. Die Reaktion wurde konstant bei einer Temperatur von 58°C gehalten. Sofort nach Einsetzen der Polymerisation wurde die Monomerdosierung, bestehend aus 281 g Sipomer^{®} PAM 100 und 590.1 g Methanol, mit einer Rate von 217.5 g/h gestartet, Dosierzeit 4 h. Danach wurde der Rührer abgestellt und die Reaktionstemperatur weitere 4 h auf 60°C gehalten. Danach wurde das so hergestellte Festharz auf 30°C gekühlt und beim Abkühlen mit ca. 8140 g Methanol (Kesselspülung) verdünnt.
Man erhielt nach einer weiteren Spülung ein Festharz mit einem Festgehalt von 31.0 % in Methanol (K-Wert nach Fikentscher, 1 % in Methanol: 44).

### Beispiel 4:

### Verseifung des Copolymeren aus Beispiel 3

In einem 120 l Autoklaven wurde das Festharz aus Beispiel 3 mit Methanol auf einen Festgehalt von 25.0 % eingestellt. 18.43 kg dieses Festharzes wurden mit 3.56 kg Methylacetat gemischt und auf eine Temperatur von 40°C erwärmt. Danach wurde der ruhende Kesselinhalt mit 2.18 kg Methanol überschichtet. Darauf wurde eine Lösung von 94.4 g wässriger Natronlauge (46 %-ig) in 416.4 g Methanol gegeben. Die Kraftaufnahme des Rührers wurde über die Zeit verfolgt.
Die Reaktionszeit bis zum Auftreten des Viskositätsmaximums (= Gelpunkt) betrug 6 min. Weitere 12 min nach Auftreten des Gelpunkts wurde die Reaktion mit 367 g Essigsäure, gelöst in 4 kg Methanol, abgebrochen. Danach wurden durch Einleiten von Heißdampf die Lösungsmittel Methanol und Methylacetat ausgetrieben und eine 23.4 %-ige Lösung eines Copolymeren aus Vinylacetat/Vinylakohol/Methylacrylat erhalten. Die Viskosität einer 4 %-igen wässrigen Lösung lag nach der Höppler-Methode bei 6.43, die Verseifungszahl bei 78.

### Beispiel 5:

### Herstellung eines Polyvinylalkohols mit 9.1 Gew.-% Methylacrylat-Comonomer

Es wurde vorgegangen wie in den Beispielen 3 und 4 und folgende Stoffmengen eingesetzt: In der Vorlage befanden sich 1.11 kg Methanol, 21.1 g TBPEH und 5550 g Vinylacetat. Nach Reaktionsbeginn wurden 554.6 g Methylacrylat, gelöst in 860 g Methanol, über 5 h dosiert. Danach wurden 5.55 g TBPEH, gelöst in 5.55 g Methanol zugegeben und noch 1 h bei 60°C gerührt. Nach Ausschalten des Rührers wurde die Temperatur noch weitere 6 h bei 60°C gehalten. Danach wurde der Ansatz gekühlt und mit 8030 g Methanol verdünnt, danach der Kesselinhalt mehrmals mit Methanol nachgespült. Man erhielt eine 32.2 %-ige Festharzlösung, K-Wert nach Fikentscher 33.2 (1 % in MeOH).
15.34 kg dieses modifizierten Festharzes wurden mit 2251 g Methanol überschichtet, zur Verseifung wurden 299.3 g NaOH (46 %-ig) in 3.13 kg Methanol gelöst und zugegeben. Der Gelpunkt wurde nach 4 min erreicht, die Verseifung nach 10 min mit 408 g Essigsäure, gelöst in 4 kg Methanol, abgebrochen. Nach Austreiben der Lösungsmittel erhielt man eine 19.2 %-ige Lösung eines modifizierten Polyvinylalkohols mit einer Verseifungszahl von 198, einem K-Wert von 23 und einer Viskosität nach Höppler von 4.23.

### Beispiel 6:

### Polymerisation von Vinylacetat und Ethylen mit einem modifizierten Polyvinylalkohol aus Beispiel 4

In einem 5 1 Laborautoklav wurden 944 g Polyvinylalkohol aus Beispiel 4 in 16.6 %-iger wässriger Lösung und 1030 g demineralisiertes Wasser sowie 1930 g Vinylacetat vorgelegt. Der pH der Vorlage wurde auf pH = 4 eingestellt. Danach wurden 250 g Ethylen mit 20 bar aufgepresst.
Die Initiatordosierungen bestanden aus 48.2 g t-Butylhydroperoxid (1.5 %-ig) und 48.2 g Ascorbinsäure (2.5 %-ig). Beide Dosierungen wurden nach Erreichen eines Temperaturgleichgewichts von 55°C mit einer Rate von 12.7 g/h gestartet. Nach Start der Reaktion wurden die Dosierraten beibehalten und die Reaktionstemperatur auf 85°C erhöht.
1 h nach Reaktionsbeginn wurden 482 g Vinylacetat und 218 g modifizierter Polyvinylalkohol aus Beispiel 4 (16.6 %-ig in Wasser) über einen Zeitraum von 2 h dosiert.
Die Initiatordosierungen wurden über insgesamt 3.5 h der Reaktion zugeführt.

Nach dem Entspannen und Nachpolymerisation mit t-BHP/Ascorbinsäure erhielt man eine Dispersion von 54.5 % FG, Viskosität nach Brookfield 160 mPas (20 U min⁻¹) und einer Dichte von 1.08 g cm⁻³.

### Beispiel 7:

Es wurde vorgegangen wie in Beispiel 6, nur wurde zur Polymerisation der modifizierte Polyvinylalkohol aus Beispiel 2 verwendet. Man erhielt eine Dispersion mit einem Feststoffgehalt von 54.7 %, Viskosität nach Brookfield 185 mPas (20 U min⁻¹) und einer Dichte von 1.08 g cm⁻³.

Die in den Beispielen 6 und 7 erhaltenen Dispersionen waren zementstabil, die Viskosität einer Mischung aus 100 Gew.-Teilen Portlandzement und 10 Gew.-Teilen Polymer (Beispiel 6) war 1 h nach dem Anmischen auf 138 % angestiegen. Bei Verwendung des Polymers aus Beispiel 7 auf 132 %. Beide Angaben beziehen sich auf den Viskositätsanstieg des reinen Portlandzements - angemischt nur mit Wasser - als Vergleichswert.

Die modifizierten Polyvinylalkohole aus den Beispielen 2, 4 und 5 wurden als Verdüsungshilfe zur Sprühtrocknung einer mit Polyvinylalkohol (1 Gew.-% eines Polyvinylalkohols mit einem Hydrolysegrad von 88 Mol-% und einer Höppler-Viskosität von 13 mPas) stabilisierten Vinylacetat-Ethylen-Copolymerdispersion I (Feststoffgehalt 58 %, Tg 16°C) und einer mit Polyvinylalkohol (5 Gew.-% eines Polyvinylalkohols mit einem Hydrolysegrad von 88 Mol-% und einer Höppler-Viskosität von 13 mPas) stabilisierten Vinylacetat-Ethylen-Copolymerdispersion II (Feststoffgehalt 54 %, Tg 10°C) eingesetzt.
Die Sprühtrocknung wurde mit einem Trockner der Firma Niro mit einer Einstoffdüse (30 bar, 65°C, Durchsatz 40 kg/h) durchgeführt. Die Eingangstemperatur am Trockner betrug 140°C, die Ausgangstemperatur 80°C. Die Redispersionspulver wurden mit 11 Gew.-% (Dispersion II) bzw. 16 Gew.-% Antiblockmittel (Dispersion I) hergestellt.

Zum Vergleich wurden die Dispersionen I und II in Gegenwart eines teilverseiften Polyvinylalkohols mit einem Hydrolysegrad von 88 Mol-% und einer Höppler-Viskosität von 4 mPas sprühgetrocknet.

### Es resultierten folgende Proben:

### Probe 1 (Vergleich):

Dispersionspulver, welches durch Sprühtrocknung von Dispersion I in Gegenwart von 5 Gew.-% eines teilverseiften Polyvinylalkohols mit einem Hydrolysegrad von 88 Mol-% und einer Höppler-Viskosität von 4 mPas erhalten wurde, und 16 Gew.-% Antiblockmittel enthält.

### Probe 2:

Dispersionspulver, welches durch Sprühtrocknung von Dispersion I in Gegenwart von 5 Gew.-% des modifizierten Polyvinylalkohols aus Beispiel 2 erhalten wurde, und 16 Gew.-% Antiblockmittel enthält.

### Probe 3:

Dispersionspulver, welches durch Sprühtrocknung von Dispersion I in Gegenwart von 5 Gew.-% des modifizierten Polyvinylalkohols aus Beispiel 5 erhalten wurde, und 16 Gew.-% Antiblockmittel enthält.

### Probe 4 (Vergleich):

Dispersionspulver, welches durch Sprühtrocknung von Dispersion II in Gegenwart von 2 Gew.-% eines teilverseiften Polyvinylalkohols mit einem Hydrolysegrad von 88 Mol-% und einer Höppler-Viskosität von 4 mPas erhalten wurde, und 11 Gew.-% Antiblockmittel enthält.

### Probe 5:

Dispersionspulver, welches durch Sprühtrocknung von Dispersion II in Gegenwart von 2 Gew.-% des modifizierten Polyvinylalkohols aus Beispiel 2 erhalten wurde, und 11 Gew.-% Antiblockmittel enthält.

### Probe 6:

Dispersionspulver, welches durch Sprühtrocknung von Dispersion II in Gegenwart von 2 Gew.-% des modifizierten Polyvinylalkohols aus Beispiel 5 erhalten wurde, und 11 Gew.-% Antiblockmittel enthält.

Die Redispersionspulver wurden auf die Haftzugfestigkeiten in Fliesenkleber in folgender Rezeptur überprüft (1 Gew.-% bzw. 3 Gew.-% Dispersionspulver):

| | |
|---|---|
| Quarzsand | 636 Teile (616 Teile) |
| Portlandzement | 350 Teile |
| Cellulose | 4 Teile |
| Dispersionspulver | 10 Teile (30 Teile) |

Die Haftzugfestigkeiten wurden nach DIN CEN 1897 bei 4 Lagerbedingungen (L1 bis L4) bestimmt:

| | |
|---|---|
| 28 d NK (L1): | 28 Tage Trockenlagerung bei Normklima (23°C/50 % Luftfeuchte; DIN 50014) |
| 7 d NK /21 d W (L2): | 7 Tage Trockenlagerung(Normklima) / 21 Tage Nasslagerung |
| 14 d NK / 14 d 70°C/1T | 14 Tage Trockenlagerung/ 14 Tage |
| 1 d NK (L3): | Wärmelagerung bei 70°C, 1 Tag Trocken lagerung |
| Frost-Tau (L4): | 25 Frost-Tau-Wechsellagerungen |

Folgende Ergebnisse wurden erhalten:

**Tabelle 1:**

| Vergleich der Haftzugwerte bei 1 Gew.-% Pulvereinsatzmenge: | | | | |
|---|---|---|---|---|
| Probe | L1 (N/mm²) | L2 (N/mm²) | L3 (N/mm²) | L4 (N/mm²) |
| 1 | 0.65 | 0.71 | 0.40 | 0.15 |
| 2 | 0.78 | 0.61 | 0.43 | 0.21 |
| 3 | 0.90 | 0.88 | 0.45 | 0.18 |
| 4 | 0.68 | 0.70 | 0.40 | 0.14 |
| 5 | 0.76 | 0.73 | 0.44 | 0.19 |
| 6 | 0.73 | 0.75 | 0.43 | 0.21 |

**Tabelle 2:**

| Vergleich der Haftzugwerte bei 3 Gew.-% Pulvereinsatzmenge: | | | | |
|---|---|---|---|---|
| Probe | L1 (N/mm²) | L2 (N/mm²) | L3 (N/mm²) | L4 (N/mm²) |
| 1 | 1.20 | 0.73 | 0.80 | 0.43 |
| 2 | 1.33 | 0.80 | 0.99 | 0.52 |
| 3 | 1.27 | 0.84 | 1.05 | 0.54 |
| 4 | 1.10 | 0.77 | 0.82 | 0.53 |
| 5 | 1.08 | 0.81 | 0.99 | 0.58 |
| 6 | 1.02 | 0.86 | 0.92 | 0.61 |

**Tabelle 3:**

| Vergleich der Offenen Zeit über Haftzugwerte bei 1 Gew.-% Pulvereinsatzmenge: | | | | | | |
|---|---|---|---|---|---|---|
| Probe | 1 | 2 | 3 | 4 | 5 | 6 |
| 5 min * | 0.65 | 0.78 | 0.90 | 0.85 | 0.76 | 0.73 |
| 20 min * | 0.27 | 0.29 | 0.32 | 0.40 | 0.42 | 0.25 |
| 30 min * | 0.16 | 0.19 | 0.20 | 0.15 | 0.20 | 0.10 |

| | | | | | | |
|---|---|---|---|---|---|---|
| * Haftzugswerte in N/mm² nach einer offenen Zeit von 5, 20 und 30 Minuten. | | | | | | |

**Tabelle 4:**

| Vergleich der Offenen Zeit über Haftzugwerte bei 3 Gew.-% Pulvereinsatzmenge: | | | | | | |
|---|---|---|---|---|---|---|
| Probe | 1 | 2 | 3 | 4 | 5 | 6 |
| 5 min * | 1.20 | 1.33 | 1.27 | 1.10 | 1.08 | 1.02 |
| 20 min * | 0.40 | 0.72 | 0.76 | 0.49 | 0.57 | 0.38 |
| 30 min * | 0.16 | 0.44 | 0.47 | 0.24 | 0.38 | 0.21 |

| | | | | | | |
|---|---|---|---|---|---|---|
| * Haftzugswerte in N/mm² nach einer offenen Zeit von 5, 20 und 30 Minuten. | | | | | | |

### Diskussion der Ergebnisse:

Wie aus den Tabellen 1 und 2 hervorgeht, zeigen Redispersionspulver, die modifizierte Polyvinylalkohole als Schutzkolloide enthalten, deutlich verbesserte Haftzugwerte nach Wärmelagerung, aber auch nach Nasslagerung und Frost-Tau-Wechsellagerung. Dies gilt sowohl für eine Modifizierung der Polyvinylalkohole mit Methylacrylat, einer latenten Carbonsäurefunktion, die in zementären (stark alkalisches Milieu) Systemen durch Hydrolyse langsam freigesetzt werden, als auch für Polyvinylalkohole, die Phosphorsäuregruppen tragen.
Weiterhin zeigt sich (Tabellen 3 und 4), dass die offene Zeit - gemessen über Haftzugwerte - bei Redispersionspulvern mit Methylacrylat-haltigen Polyvinylalkoholen deutlich verbessert wird.

## Patentansprüche

1. Modifizierte Polyvinylalkohole enthaltende Polymerzusammensetzungen in Form deren in Wasser redispergierbaren Pulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, **dadurch gekennzeichnet, dass** als modifizierte Polyvinylalkohole solche mit latenter Carbonsäurefunktion und/oder solche mit phosphorhaltigen Comonomereinheiten enthalten sind.

2. Modifizierte Polyvinylalkohole enthaltende Polymerzusammensetzungen nach Anspruch 1, **dadurch gekennzeichnet, dass** Polyvinylalkohole mit einer oder mehreren Comonomereinheiten aus der Gruppe umfassend Methacrylsäureester und Acrylsäureester von Alkoholen mit 1 bis 15 C-Atomen enthalten sind.

3. Modifizierte Polyvinylalkohole enthaltende Polymerzusammensetzungen nach Anspruch 1, **dadurch gekennzeichnet, dass** Polyvinylalkohole mit einer oder mehreren Comonomereinheiten aus der Gruppe umfassend Vinylphosphonsäure, Methacrylsäureester und Acrylsäureester von Phosphorsäure-endmodifizierten Polyalkylenglykolen mit C₂- bis C₄-Alkyleneinheiten und 1 bis 100 Oxyalkyleneinheiten enthalten sind.

4. Modifizierte Polyvinylalkohole enthaltende Polymerzusammensetzungen gemäß Anspruch 1 bis 3, in Form deren in Wasser redispergierbaren Pulver, erhältlich mittels Sprühtrocknung von wässrigen Polymerdispersionen, welche mit modifizierten Polyvinylalkoholen mit latenter Carbonsäurefunktion, oder mit phosphorhaltigen Comonomereinheiten, stabilisiert sind, in Gegenwart von teilverseiftem Polyvinylalkohol als Verdüsungshilfe.

5. Verfahren zur Herstellung von modifizierte Polyvinylalkohole enthaltenden Polymerzusammensetzungen gemäß Anspruch 1 bis 3, **dadurch gekennzeichnet, dass** ein oder mehrere Monomere aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, in Gegenwart von einem oder mehreren Schutzkolloiden polymerisiert werden, aus der Gruppe umfassend modifizierte Polyvinylalkohole mit latenter Carbonsäurefunktion und modifizierte Polyvinylalkohole mit phosphorhaltigen Comonomereinheiten.

6. Verfahren zur Herstellung von modifizierte Polyvinylalkohole enthaltenden Polymerzusammensetzungen gemäß Anspruch 1 bis 3, **dadurch gekennzeichnet, dass** mit von den modifizierten Polyvinylalkoholen verschiedenen, Schutzkolloiden stabilisierte Polymerdispersionen, in Gegenwart eines modifizierten Polyvinylalkohols mit latenter Carbonsäurefunktion und/oder mit phosphorhaltigen Comonomereinheiten als Verdüsungshilfe sprühgetrocknet werden.

7. Verfahren zur Herstellung von modifizierte Polyvinylalkohole enthaltenden Polymerzusammensetzungen gemäß Anspruch 1 bis 3, **dadurch gekennzeichnet, dass** wässrige Polymerdispersionen, welche als Schutzkolloid modifizierten Polyvinylalkohol mit latenter Carbonsäurefunktion und/oder Polyvinylalkohol mit phosphorhaltigen Comonomereinheiten enthalten, in Gegenwart einer Verdüsungshilfe sprühgetrocknet werden, wobei die Verdüsungshilfe ein modifizierter Polyvinylalkohol mit latenter Carbonsäurefunktion oder ein modifizierter Polyvinylalkohol mit phosphorhaltigen Comonomereinheiten sein kann.

8. Verfahren zur Herstellung von modifizierte Polyvinylalkohole enthaltenden Polymerzusammensetzungen gemäß Anspruch 1 bis 3, **dadurch gekennzeichnet, dass** wässrige Polymerdispersionen, welche als Schutzkolloid modifizierten Polyvinylalkohol mit latenter Carbonsäurefunktion und/oder Polyvinylalkohol mit phosphorhaltigen Comonomereinheiten enthalten; in Gegenwart einer Verdüsungshilfe sprühgetrocknet werden, wobei als Verdüsungshilfe, ein oder mehrere andere, von den modifizierten Polyvinylalkoholen verschiedene, Schutzkolloide eingesetzt werden.

9. Verfahren zur Herstellung von modifizierte Polyvinylalkohole enthaltenden Polymerzusammensetzungen gemäß Anspruch 1 bis 3, **dadurch gekennzeichnet, dass** wässrige Polymerdsipersionen, welche mit teilverseiftem Polyvinylalkohol oder einem mit phosphorhaltigen Comonomereinheiten modifizierten Polyvinylalkohol stabilisiert sind, in Gegenwart von einem mit phosphorhaltigen Comonomereinheiten modifizierten Polyvinylalkohol oder einem modifizierten Polyvinylalkohol mit latenter Carbonsäurefunktion als Verdüsungshilfe getrocknet werden.

10. Verwendung der modifizierte Polyvinylalkohole enthaltenden Polymerzusammensetzungen in Form deren in Wasser redispergierbaren Pulver gemäß Anspruch 1 bis 4 in bauchemischen Produkten in Verbindung mit hydraulisch abbindenden oder hydraulisch erhärtenden Bindemitteln.

11. Verwendung nach Anspruch 10 in Bauklebern, Wärmedämmverbundsystemen, Putzen, Spachtelmassen, Fußbodenspachtelmassen, Dichtschlämmen, Fugenmörtel und Farben.

12. Verwendung der modifizierte Polyvinylalkohole enthaltenden Polymerzusammensetzungen in Form deren in Wasser redispergierbaren Pulver gemäß Anspruch 1 bis 4 als Alleinbindemittel für Beschichtungsmittel und Klebemittel.

13. Verwendung der modifizierte Polyvinylalkohole enthaltenden Polymerzusammensetzungen in Form deren in Wasser redispergierbaren Pulver gemäß Anspruch 1 bis 4 als Beschichtungs- oder Bindemittel für Textilien und Papier.

## Claims

1. Polymer compositions comprising modified polyvinyl alcohols in the form of water-redispersible powders which are based on homopolymers or copolymers of one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides, **characterized in that** the modified polyvinyl alcohols present are polyvinyl alcohols having a latent carboxylic acid function and/or polyvinyl alcohols comprising phosphorus-containing comonomer units.

2. Polymer compositions comprising modified polyvinyl alcohols according to claim 1, **characterized in that** polyvinyl alcohols comprising one or more comonomer units from the group consisting of methacrylic esters and acrylic esters of alcohols having from 1 to 15 carbon atoms are present.

3. Polymer compositions comprising modified polyvinyl alcohols according to claim 1, **characterized in that** polyvinyl alcohols comprising one or more comonomer units from the group consisting of vinylphosphonic acid, methacrylic esters and acrylic esters of polyalkylene glycols which are end-modified by phosphoric acid and have C₂-C₄-alkylene units and from 1 to 100 oxyalkylene units are present.

4. Polymer compositions comprising modified polyvinyl alcohols according to any of claims 1 to 3 in the form of a water-redispersible powder which can be obtained by means of spray drying aqueous polymer dispersions which have been stabilized with modified polyvinyl alcohols having a latent carboxylic acid function or comprising phosphorus-containing comonomer units in the presence of partially hydrolyzed polyvinyl alcohol as atomization aid.

5. Process for preparing polymer compositions comprising modified polyvinyl alcohols according to any of claims 1 to 3, **characterized in that** one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides are polymerized in the presence of one or more protective colloids from the group consisting of modified polyvinyl alcohols having a latent carboxylic acid function and modified polyvinyl alcohols comprising phosphorus-containing comonomer units.

6. Process for preparing polymer compositions comprising modified polyvinyl alcohols according to any of claims 1 to 3, **characterized in that** polymer dispersions stabilized with protective colloids different from the modified polyvinyl alcohols are spray dried in the presence of a modified polyvinyl alcohol having a latent carboxylic acid function and/or comprising phosphorus-containing comonomer units as atomization aid.

7. Process for preparing polymer compositions comprising modified polyvinyl alcohols according to any of claims 1 to 3, **characterized in that** aqueous polymer dispersions comprising modified polyvinyl alcohol having a latent carboxylic acid function and/or polyvinyl alcohol comprising phosphorus-containing comonomer units as protective colloid are spray dried in the presence of an atomization aid which may be a modified polyvinyl alcohol having a latent carboxylic acid function or a modified polyvinyl alcohol comprising phosphorus-containing comonomer units.

8. Process for preparing polymer compositions comprising modified polyvinyl alcohols according to any of claims 1 to 3, **characterized in that** aqueous polymer dispersions comprising modified polyvinyl alcohol having a latent carboxylic acid function and/or polyvinyl alcohol comprising phosphorus-containing comonomer units as protective colloid are spray dried in the presence of an atomization aid, with the atomization aid used being able to be one or more other protective colloids different from the modified polyvinyl alcohols.

9. Process for preparing polymer compositions comprising modified polyvinyl alcohols according to any of claims 1 to 3, **characterized in that** aqueous polymer dispersions stabilized with partially hydrolyzed polyvinyl alcohol or a polyvinyl alcohol modified with phosphorus-containing comonomer units are dried in the presence of a polyvinyl alcohol modified with phosphorus-containing comonomer units or a modified polyvinyl alcohol having a latent carboxylic acid function as atomization aid.

10. Use of the polymer compositions comprising modified polyvinyl alcohols in the form of water-redispersible powders according to any of claims 1 to 4 in building-chemical products in combination with hydraulically setting or hydraulically curing binders.

11. Use according to claim 10 in building adhesives, thermal insulation systems, plasters and renders, troweling compositions, flooring screeds, sealing slurries, jointing mortars and paints.

12. Use of the polymer compositions comprising modified polyvinyl alcohols in the form of water-redispersible powders according to any of claims 1 to 4 as sole binders for coating compositions and adhesives.

13. Use of the polymer compositions comprising modified polyvinyl alcohols in the form of water-redispersible powders according to any of claims 1 to 4 as coating agents or binders for textiles and paper.

## Revendications

1. Compositions polymères contenant des alcools polyvinyliques modifiés sous la forme de leurs poudres re-dispersibles dans l'eau à base d'homopolymères ou de polymères mixtes d'un ou de plusieurs monomères provenant du groupe comprenant des esters vinyliques d'acides alkylcarboxyliques non ramifiés ou ramifiés, ayant de 1 à 15 atomes de C, des esters de l'acide méthacrylique et des esters de l'acide acrylique d'alcools ayant de 1 à 15 atomes de C, des aromates vinyliques, des oléfines, des diènes et des halogénures vinyliques, **caractérisées en ce qu'**y sont contenus, en tant qu'alcools polyvinyliques modifiés, ceux ayant une fonction d'acide carboxylique latente et/ou ceux ayant des unités de comonomères contenant du phosphore.

2. Compositions polymères contenant des alcools polyvinyliques modifiés selon la revendication 1, **caractérisées en ce qu'**y sont contenus des alcools polyvinyliques ayant une ou plusieurs unités de comonomères provenant du groupe comprenant des esters de l'acide méthacrylique et des esters de l'acide acrylique d'alcools ayant de 1 à 15 atomes de C.

3. Compositions polymères contenant des alcools polyvinyliques selon la revendication 1, **caractérisées en ce qu'**y sont contenus des alcools polyvinyliques ayant une ou plusieurs unités de comonomères provenant du groupe comprenant l'acide vinylphosphonique, des esters de l'acide méthacrylique et des esters de l'acide acrylique de polyalkylèneglycols modifiés à terminaisons d'acide phosphorique ayant des unités C₂ à C₄ alkylène et de 1 à 100 unités oxyalkylène.

4. Compositions polymères contenant des alcools polyvinyliques modifiés selon les revendications 1 à 3, sous la forme de leurs poudres re-dispersibles dans l'eau, que l'on peut obtenir par pulvérisation à sec de dispersions polymères aqueuses, qui sont stabilisées à l'aide d'alcools polyvinyliques modifiés ayant une fonction d'acide carboxylique latente ou ayant des unités de comonomères contenant du phosphore, en présence d'un alcool polyvinylique partiellement saponifié en tant qu'adjuvant de pulvérisation.

5. Procédé en vue de la préparation de compositions polymères contenant des alcools polyvinyliques modifiés selon les revendications 1 à 3, **caractérisé en ce que** l'on polymérise un ou plusieurs monomères provenant du groupe comprenant des esters vinyliques d'acides alkylcarboxyliques non ramifiés ou ramifiés ayant de 1 à 15 atomes de C, des esters de l'acide méthacrylique et des esters de l'acide acrylique d'alcools ayant de 1 à 15 atomes de C, des aromates vinyliques, des oléfines, des diènes et des halogénures vinyliques, en présence d'un ou de plusieurs colloïdes de protection, provenant du groupe comprenant des alcools polyvinyliques modifiés ayant une fonction d'acide carboxylique latente et des alcools polyvinyliques modifiés ayant des unités de comonomères contenant du phosphore.

6. Procédé en vue de la préparation de compositions polymères contenant des alcools polyvinyliques modifiés selon les revendications 1 à 3, **caractérisé en ce que** l'on procède au séchage par pulvérisation de dispersions polymères stabilisées à l'aide de colloïdes de protection différents des alcools polyvinyliques modifiés, en présence d'un alcool polyvinylique modifié ayant une fonction acide carboxylique latente et/ou des unités de comonomères contenant du phosphore en tant qu'adjuvant de pulvérisation.

7. Procédé en vue de la préparation de compositions polymères contenant des alcools polyvinyliques modifiés selon les revendications 1 à 3, **caractérisé en ce que** les dispersions polymères aqueuses, qui contiennent, en tant que colloïde de protection, un alcool polyvinylique modifié ayant une fonction acide carboxylique latente et/ou un alcool polyvinylique ayant des unités de comonomères contenant du phosphore, sont séchées par pulvérisation en présence d'un adjuvant de pulvérisation, l'adjuvant de pulvérisation pouvant être un alcool polyvinylique modifié ayant une fonction acide carboxylique latente ou un alcool polyvinylique modifié ayant des unités de comonomères contenant du phosphore.

8. Procédé en vue de la préparation de compositions polymères contenant des alcools polyvinyliques selon les revendications 1 à 3, **caractérisé en ce que** les dispersions polymères aqueuses, qui contiennent, en tant que colloïde de protection, un alcool polyvinylique modifié ayant une fonction acide carboxylique latente et/ou un alcool polyvinylique ayant des unités de comonomères contenant du phosphore, sont séchées par pulvérisation en présence d'un adjuvant de pulvérisation, un ou plusieurs autres colloïdes de protection, différents des alcools polyvinyliques modifiés, étant utilisés en tant qu'adjuvant de pulvérisation.

9. Procédé en vue de la préparation de compositions polymères contenant des alcools polyvinyliques selon les revendications 1 à 3, **caractérisé en ce que** les dispersions polymères aqueuses, qui sont stabilisées à l'aide d'un alcool polyvinylique partiellement saponifié ou à l'aide d'un alcool polyvinylique modifié avec des unités de comonomères contenant du phosphore, sont séchées en présence d'un alcool polyvinylique modifié avec des unités de comonomères contenant du phosphore ou d'un alcool polyvinylique modifié ayant une fonction carboxylique latente en tant qu'adjuvant de pulvérisation.

10. Utilisation des compositions polymères contenant des alcools polyvinyliques modifiés sous la forme de leurs poudres re-dispersibles dans l'eau selon les revendications 1 à 4, dans des produits chimiques de construction en relation avec les liants à prise hydraulique ou à durcissement hydraulique.

11. Utilisation selon la revendication 10 dans des adhésifs de construction, des systèmes composites d'isolation thermique, des crépis, des mastics, des mastics pour sols, des boues d'étanchéification, des mortiers pour joints et des couleurs.

12. Utilisation des compositions polymères contenant des alcools polyvinyliques modifiés sous la forme de leurs poudres re-dispersibles dans l'eau selon les revendications 1 à 4, en tant que liants uniques pour les agents de revêtement et les adhésifs.

13. Utilisation des compositions polymères contenant des alcools polyvinyliques modifiés sous la forme de leurs poudres re-dispersibles dans l'eau selon les revendications 1 à 4 en tant qu'agents de revêtement ou en tant que liants pour les textiles et le papier.
